# FASCICULE DE BREVET EUROPEEN

(11) **EP 0 526 822 B1**
(45) Date de publication et mention de la délivrance du brevet: **06.11.1996**
(21) Numéro de dépôt: 92112852.6
(22) Date de dépôt: 28.07.1992
(51) Int. Cl.: H04B 5/00, B61L 3/22, H01Q 1/32

(54) **Procédé d'intervention à distance dans un puits d'un site de stockage profond de déchets nucléaires**
Ferneingriffsverfahren in einem Schacht eines tiefen Lagers für nukleare Abfallstoffe
Remote intervention method in a shaft of a deep disposal side of nuclear waste

(30) Priorité: 01.08.1991 FR 9109811
(43) Date de publication de la demande: 10.02.1993
(73) Titulaire: GEC ALSTHOM SYSTEMES ET SERVICES SA, 75116 Paris (FR)
(72) Inventeur: Freneix, Gérard, F-44230 St Sebastien (FR)
(74) Mandataire: Fournier, Michel

(56) Documents cités:
- EP-A- 0 274 055
- EP-A- 0 355 338

## Description

La présente invention concerne un procédé d'intervention dans une galerie souterraine reliée à la surface par un puits pourvu d'un monte-charge pour stockage profond de déchets radio-actifs.

Actuellement ces déchets sont stockés en surface, dans les bâtiments ou conteneurs équipés d'étanchéité aux rayonnements ionisants ou enfouis sous une couche de protection.

Si à court terme de tels procédés peuvent sembler suffisants pour les matériaux de faible activité radioactive, ils s'avèrent irraisonnables compte tenu de la haute activité de certains produits et de l'augmentation de la masse de ces produits.

Une solution consiste à stocker les déchets radioactifs à plusieurs km de profondeur.

Le brevet français 2 608 119 décrit un dispositif de transmission d'informations et/ou d'instructions à large bande passante et/ou de localisation entre un élément mobile et un poste de contrôle de cet élément, comportant un tube creux parallèle au trajet suivi par l'élément mobile, formant guide d'ondes, dont une face émissive est percée d'un réseau d'ouvertures de passage d'un rayonnement électromagnétique en hyperfréquences, l'élément mobile étant muni d'au moins une antenne d'émission et/ou de réception d'ondes hyperfréquences disposée en regard de la face du tube percée d'un réseau d'ouvertures, le tube creux étant relié à au moins un organe d'alimentation en ondes hyperfréquences et à un organe de réception d'ondes hyperfréquences provenant de lui.

Un tel dispositif permet l'échange d'informations analogiques à large bande et/ou numériques à haut débit, telles que d'une part des signaux téléphoniques et/ou vidéo et/ou d'autre part de signaux de télémesures et/ou de télécommandes et permet aussi des mesures de position et/ou de vitesse de l'élément mobile se déplaçant près du tube formant guide d'ondes hyperfréquence, et qui sera appelé guide d'ondes ci-après.

La présente invention se rapporte à un procédé d'intervention dans un puits et/ou une galerie souterraine, en particulier de stockage de déchets radioactifs en utilisant de tels guides d'ondes en tant que dispositifs de transmission et de télécommandes.

Il serait possible d'utiliser des ondes radioélectriques aériennes.

Cependant une telle transmission présente des problèmes de brouillages et d'interférences et en particulier pour une transmission souterraine, des effet dits tunnels peuvent empêcher la transmission des ondes de l'émetteur au récepteur.

Ces problèmes sont résolus grâce au procédé conforme à l'invention revendiquée.

Les avantages de l'invention apparaîtront à la lecture de la description suivante exposant l'invention plus en détail à l'aide de dessins représentant seulement un mode de réalisation.

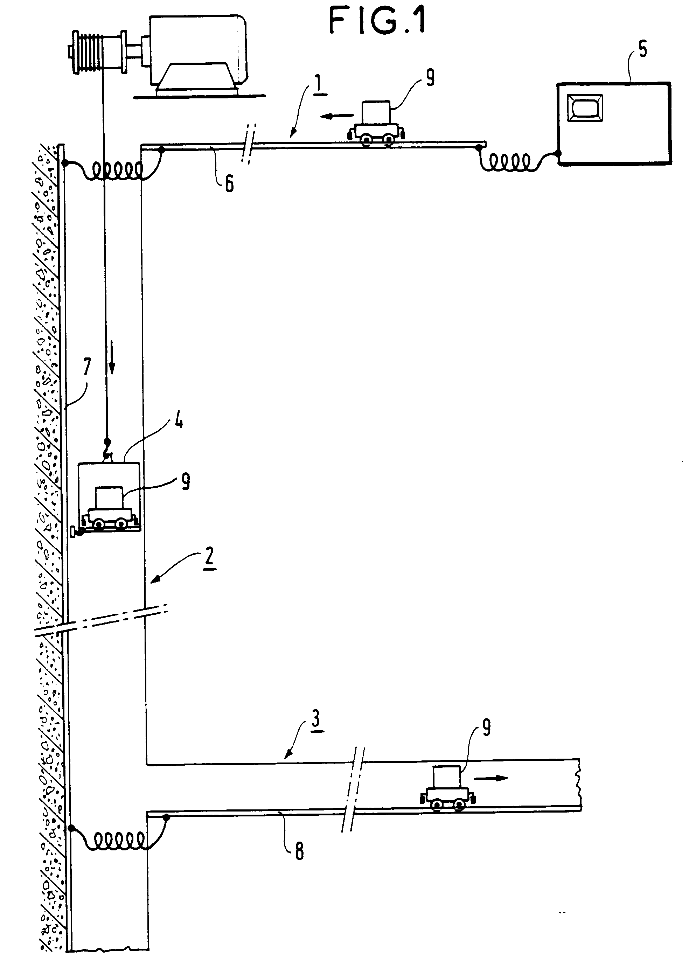

La figure 1 est une vue schématique d'un site équipé selon le procédé conforme à l'invention.

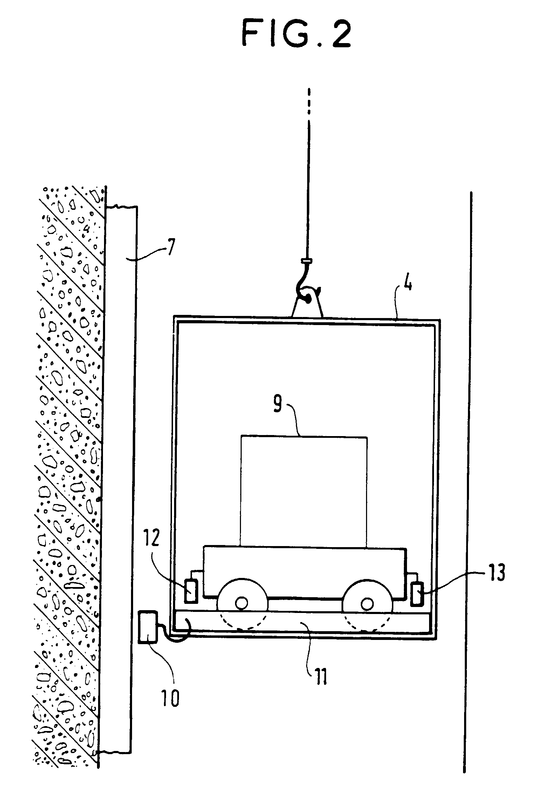

La figure 2 est une vue schématique représentant plus particulièrement le monte-charge.

Un site d'intervention souterraine, en particulier destiné au stockage en profondeur de déchets radioactifs comporte un puits 2 reliant la surface 1 à un réseau de galeries 3 et équipé d'un monte charge 4.

A proximité de l'entrée du puits 2 est installé un poste de contrôle 5. Ce poste de contrôle comprend un générateur d'ondes hyperfréquences et une armoire réceptrice de signaux. Cette dernière est reliée à un ou plusieurs écrans de télévision disposés sur un tableau de contrôle en face du poste du surveillant.

Le poste de contrôle 5 est relié par un câble coaxial à une première ligne 6 de guide d'ondes reliant ce poste 5 à l'entrée du puits 2.

Le puits 2 est équipé d'une deuxième ligne 7 de guide d'ondes verticale et reliée par un câble coaxial à la première ligne 6 par son extrémité supérieure. Une troisième ligne 8 de guides d'ondes est installée dans chaque galerie 3 et est reliée par un câble coaxial à la deuxième ligne 7 à proximité de l'entrée de la galerie 3.

Le monte-charge 4 est équipé d'une antenne 10 disposé en vis-à-vis de la deuxième ligne 7. Grâce à cette liaison, est réalisée la télécommande et le suivi du monte-charge 4 au niveau du poste de contrôle 5.

Le monte-charge 4 comprend également un guide d'ondes 11 disposé selon l'exemple représenté sur son plancher. Ce guide d'ondes 11 est relié à l'antenne 10 du monte-charge.

Un chariot d'intervention 9 éventuellement guidés sur rails, comporte deux antennes. L'une 12 est disposé à l'avant du chariot 9 et l'autre 13 à l'arrière 13. Ces antennes 12, 13 assurent la transmission entre le chariot 9 et le poste de contrôle 5 pour son suivi et sa télécommande :
- par l'intermédiaire de la première ligne 6 en surface 1;
- par l'intermédiaire de la première ligne 6, de la deuxième ligne 7 et du guide d'ondes 11 du monte charge, lorsque le chariot 9 est chargé dans le monte-charge 4 et celui-ci est en descente dans le puits 2;
- par l'intermédiaire de la première ligne 6, de la deuxième ligne 7 et de la troisième ligne 8, lorsque le chariot 9 est déchargé du monte-charge 4 et déplacé dans la galerie 3.

La présence des deux antennes 12, 13 permet de garder continue la liaison chariot/poste de contrôle lors du chargement et du déchargement du chariot 9 dans et hors du monte charge. Lors de ces passages discontinus de la première ligne 6 au guide 11 et de ce dernier à la troisième ligne 8, l'une des antennes 12 ou 13 reste toujours en vis-à-vis des guides d'ondes correspondants.

Dans le monte-charge 4 et la galerie 3, les guides d'ondes peuvent être disposés en plancher, en plafond ou latéralement, les antennes 12, 13 du chariot 9 étant disposées en conséquence.

Il est ainsi possible de suivre et de piloter plusieurs chariots 9 à la fois. La capacité d'intervention peut être augmentée, de plus, en multipliant le nombre de guide d'ondes installés et fonctionnant en parallèle.

Ce procédé d'intervention est destiné au stockage en profondeur de déchets radioactifs.

Dans ce cas, le chariot 9 est pourvu de moyens de transport des colis radioactifs et de moyens de décharge de ceux-ci dans la galerie 3. Ces moyens sont pilotés à partir du poste de contrôle 5.

Il comprend également au moins une caméra permettant la visualisation et le pilotage à partir du poste de contrôle.

Il peut comporter aussi des moyens de mesure, en particulier de température des colis nucléaires qui peut augmenter du fait de l'énergie résiduelle.

Grâce à l'invention, sont supprimées toutes liaisons mécaniques ou à frottement pour assurer la télétransmission.

## Revendications

1. Procédé d'intervention sur un site consistant à équiper le site de guides d'ondes à partir d'un poste de contrôle (5) comprenant un générateur et un récepteur de signaux et situé en surface, ces guides d'ondes étant disposés selon au moins une première ligne (6) en surface, disposée du poste de contrôle (5) jusqu'à l'entrée d'un puits (2), caractérisé en ce que ledit site est constitué d'une galerie souterraine (3) pour le stockage profond de déchets radio-actifs reliée à la surface (1) par ledit puits (2) pourvu d'un monte-charge (4),
en ce que les guides d'ondes sont également disposés
- selon au moins une deuxième ligne (7) disposée le long du puits (2) et reliée à la première ligne (6) à son extrémité supérieure,
- selon au moins une troisième ligne (8) disposée le long de la galerie (3) et reliée à la deuxième ligne (7) à proximité de l'entrée de la galerie (3),
et sont destinés au suivi et/ou à la télécommande du monte-charge (4) et d'au moins un chariot d'intervention (9), en ce que le monte-charge (4) est équipé :
- d'une antenne (10) destinée à la liaison entre la deuxième ligne (7) et le monte-charge (4),
- d'un guide d'ondes (11) destiné à la liaison entre le monte-charge (4) et le chariot (9) transporté par celui-ci, l'antenne (10) étant reliée au guide d'ondes (11) et en ce que le chariot (9) est équipé de deux antennes, une avant (12) et une arrière (13) destinées à la liaison entre le chariot (9) et la première (6) ou troisième (8) ligne et entre le chariot (9) et le guide d'ondes (11) du monte-charge (4).

2. Procédé selon la revendication 1, caractérisé en ce que le chariot (9) est pourvu de moyens de transport de colis radioactifs et de moyens de décharge de ceux-ci dans la galerie (3).

3. Procédé selon la revendication 2, caractérisé en ce que le chariot (9) est pourvu de moyens de mesure de température des colis.

## Patentansprüche

1. Verfahren zur Intervention in einen Standort, das darin besteht, den Standort mit Wellenleitern ausgehend von einer Kontrollstation (5) auszustatten, die einen Signalgenerator und einen Signalempfänger aufweist und an der Oberfläche angeordnet ist, wobei diese Wellenleiter mindestens eine erste Leitung (6) an der Oberfläche aufweisen, die sich von der Kontrollstation (5) bis zum Eingang eines Schachts (2) erstreckt, dadurch gekennzeichnet, daß der Standort aus einer unterirdischen Kaverne (3) für die Tiefenlagerung von radioaktiven Abfällen besteht, die mit der Oberfläche (1) über den mit einem Lastenaufzug (4) versehenen Schacht (2) verbunden ist,
daß die Wellenleiter weiter
- mindestens eine zweite Leitung (7) aufweisen, die entlang des Schachts (2) verläuft und mit der ersten Leitung (6) an ihrem oberen Ende verbunden ist,
- mindestens eine dritte Leitung (8) aufweisen, die entlang der Kaverne (3) verläuft und mit der zweiten Leitung (7) in der Nähe des Eingangs der Kaverne (3) verbunden ist, wobei die Leitungen der Verfolgung und/oder Fernsteuerung des Lastenaufzugs (4) und mindestens einen Interventionswagens (9) dienen,
daß der Lastenaufzug (4) ausgestattet ist
- mit einer Antenne (10) zur Nachrichtenverbindung zwischen der zweiten Leitung (7) und dem Lastenaufzug (4),
- einem Wellenleiter (11) zur Nachrichtenverbindung zwischen dem Lastenaufzug (4) und dem von ihm getragenen Wagen (9), wobei die Antenne (10) mit dem Wellenleiter (11) verbunden ist, und daß der Wagen (9) mit zwei Antennen versehen ist,
einer vorderen (12) und einer hinteren (13), die die Nachrichtenverbindung zwischen dem Wagen (9) und der ersten (6) oder dritten Leitung (8) und zwischen dem Wagen (9) und dem Wellenleiter (11) des Lastenaufzugs (4) herstellen sollen.

2. Verfahren nach Anspruch 1, dadurch gekennzeichnet, daß der Wagen (9) mit Mitteln zum Transport von radioaktiven Paketen und Mitteln zur Entladung dieser Pakete in die Kaverne (3) versehen ist.

3. Verfahren nach Anspruch 2, dadurch gekennzeichnet, daß der Wagen (9) mit Mitteln zur Messung der Temperatur der Pakete ausgestattet ist.

## Claims

1. A method of acting remotely on a site consisting in fitting the site with waveguides running from a control station (5) which includes both a signal generator and a signal receiver and which is situated on the surface, said waveguides being disposed as at least one first line (6) at the surface running from the control station (5) to the entrance of a shaft (2), the method being characterized in that said site is constituted by an underground gallery (3) for deep storage of radioactive wastes connected to the surface (1) by said shaft (2) which is provided with an elevator (4),
in that the waveguides are disposed as follows:
at least one second line (7) disposed along the shaft (2) and connected at its top end to the first line (6);
at least one third line (8) disposed along the gallery (3) and connected to the second line (7) in the vicinity of the entrance to the gallery (3); and
said waveguides are designed for tracking and/or remote controlling the elevator (4) and at least one carriage (9) for remote action;
in that the elevator (4) is fitted both:
with an antenna (10) for providing the connection between the second line (7) and the elevator (4); and
with a waveguide (11) for providing the connection between the elevator (4) and the carriage (9) transported thereby, the antenna (10) being connected to the waveguide (11); and
in that the carriage (9) is fitted with two antennas, a front antenna (10) and a rear antenna (13) for providing connections between the carriage (9) and the first line (6) or the third line (8) and between the carriage (9) and the waveguide (11) of the elevator (4).

2. A method according to claim 1, characterized in that the carriage (9) is provided with means for transporting radioactive loads, and means for discharging said loads in the gallery (3).

3. A method according to claim 2, characterized in that the carriage (9) is provided with means for measuring the temperature of the loads.
